# EUROPEAN PATENT APPLICATION

(11) **EP 2 312 596 A2**
(43) Date of publication of application: **20.04.2011**
(21) Application number: 10187354.5
(22) Date of filing: 13.10.2010
(51) Int. Cl.: H01F 17/04, H01F 27/34, H01F 41/06, H02K 3/28, H02K 21/18

(54) **SIP (symmetrical-in-parallel) induction coils for electromagnetic devices**

(30) Priority: 14.10.2009 TW 098134775
(71) Applicant: Lerrel World Hi-Tech Corporation, Short Hills, NJ 07078 (US)
(72) Inventor: Beversluis, Michael A., Cambridge, CB1 1AH (GB)
(74) Representative: Horak, Michael

(57) **Abstract**

A SIP (Symmetrical-in-Parallel) induction coil is made of winding two conductive wires symmetrically around a magnetic core and connecting them in parallel (refer to four figures in four pages). Such SIP induction coils can be applied to construct electromagnetic devices which have unique outstanding features of reduced magnetization current, reduced cupper loss, higher power efficiency, lower temperature-rise and reduced size (volume) of the electromagnetic devices.

## Description

### (a) Technical Field of the Invention

This invention relates to a SIP (Symmetrical-in-Parallel) Induction Coil is made of winding two conductive wires symmetrically around a magnetic core and connecting them in parallel (refer to four figures in four pages). Such SIP Induction Coils can be applied to construct electromagnetic devices which have unique outstanding features of reduced magnetization current, reduced cupper loss, higher power efficiency, lower temperature-rise and reduced size (volume) of the electromagnetic devices.

### (b) Description of the Prior Art

Any prior-art induction coil is made of winding a single conductive wire around the magnetic core from one end to the other end and winding back, and repeating winding cycles until the required number of turns are completed. When two prior-art induction coils (single-wire coils) are connected in parallel, it can induce voltage difference to cause internal circulating current within two coils which incurs additional cupper loss. Because any prior-art induction coils (single wire wound coils) are unbalanced, it would induce additional cupper loss, higher temperature-rise and lower efficiency

### SUMMARY OF THE INVENTION

The invention of a SIP (Symmetrical-In-Parallel) Induction Coil is made of winding two conductive wires symmetrically around a magnetic core from the center of the core toward the two ends and winding back to the center, and repeating winding cycles until the required number of turns are completed and the wound coils are connected in parallel to form a SIP Induction Coil. The invention of a SIP Induction Coil is not limited to an induction coil constructed from the above of two identical coils wound symmetrically and connected in parallel but also includes any combination of a pair of SIP Induction Coils or more pairs of SIP Induction Coils. The invention of SIP Induction Coils can be applied to various electromagnetic devices. These SIP Electromagnetic Devices include inductors, transformers, motors and generators with many great benefits of reduced cupper loss, lower temperature-rise, better performance, higher efficiency, and reduced size (volume) of the devices based on the same output power as the prior-art devices.

Research and development of electromagnetic devices has long been focused on the designs of magnetic circuits for improvement. It has reached to a point where the optimal designs of magnetic circuits in the prior-art electromagnetic devices have almost been achieved. The invention of the SIP Induction Coils is also aimed to achieve another unique feature of "balance" concept in designing SIP Electromagnetic Devices. To further improve future electric Power utilization and power transmission, the invention of SIP Induction Coils and SIP Electromagnetic Devices can provide many great benefits of reduced magnetization current, less cupper loss, lower temperature-rise, better performance, higher efficiency and reduced size (volume) of electromagnetic devices (inductors, transformers, motors and generators) for more energy savings and reduced harmfulness to animals and plants from less intensity of electromagnetic fields.

The invention can provide designers more freedom (fewer constraints) of selecting electromagnetic parameters in designing electromagnetic devices.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

Figure 1 illustrates a SIP induction coil or a SIP inductor according to the present invention;
Figure 2 illustrates a traditional transformer (prior art);
Figure 3 illustrates a SIP transformer according to the present invention; and
Figure 4 illustrates a SIP motor or a SIP generator according to the present invention.

### DETAILED DESCRIPTION OF THE PREFERRED EMBODIMENTS

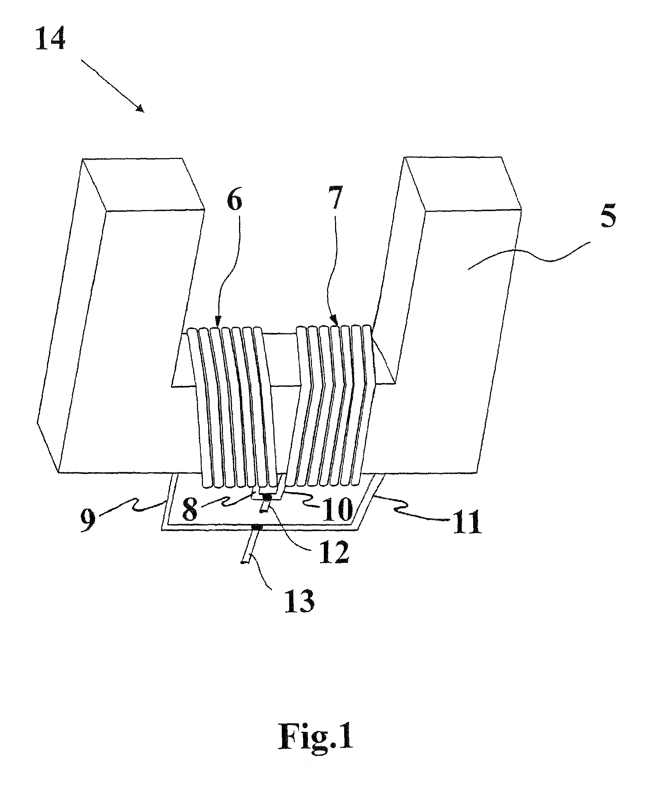

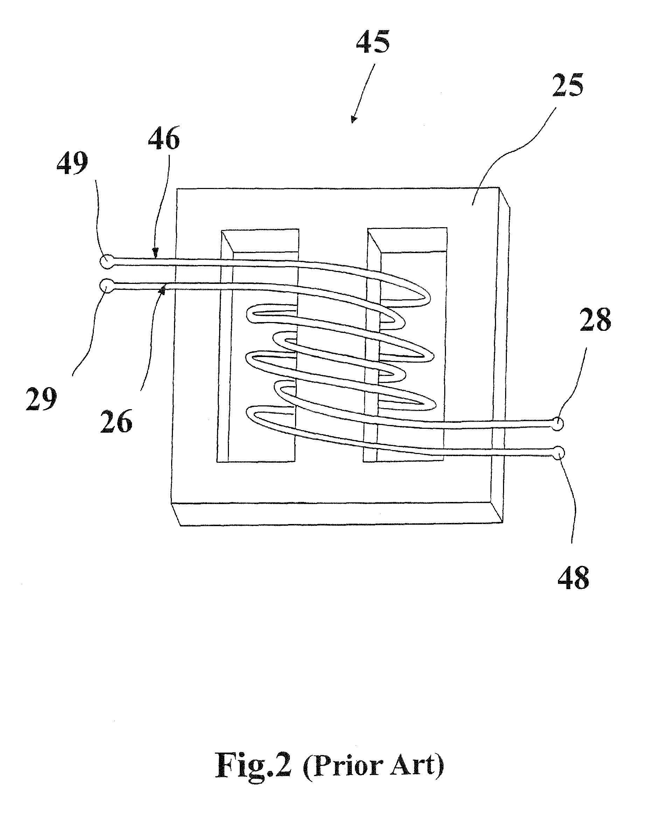

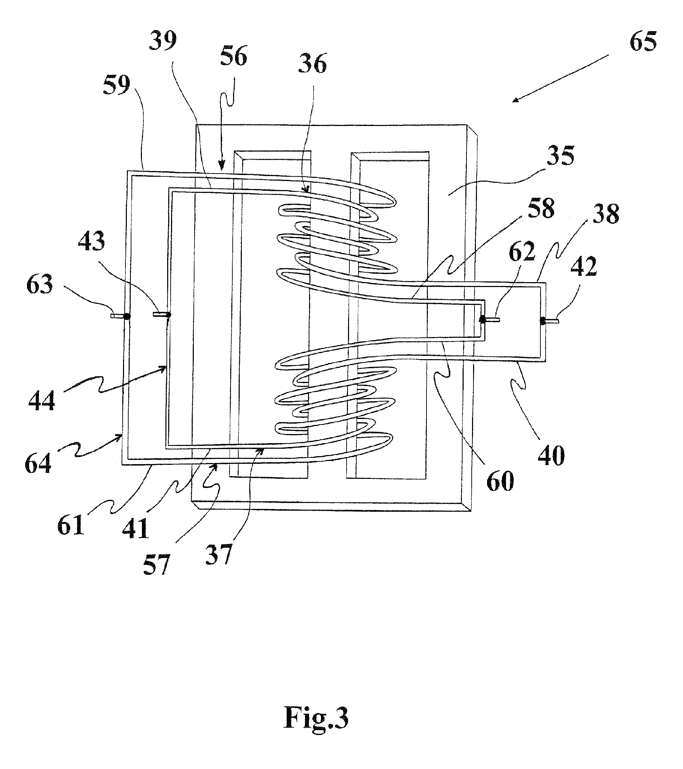

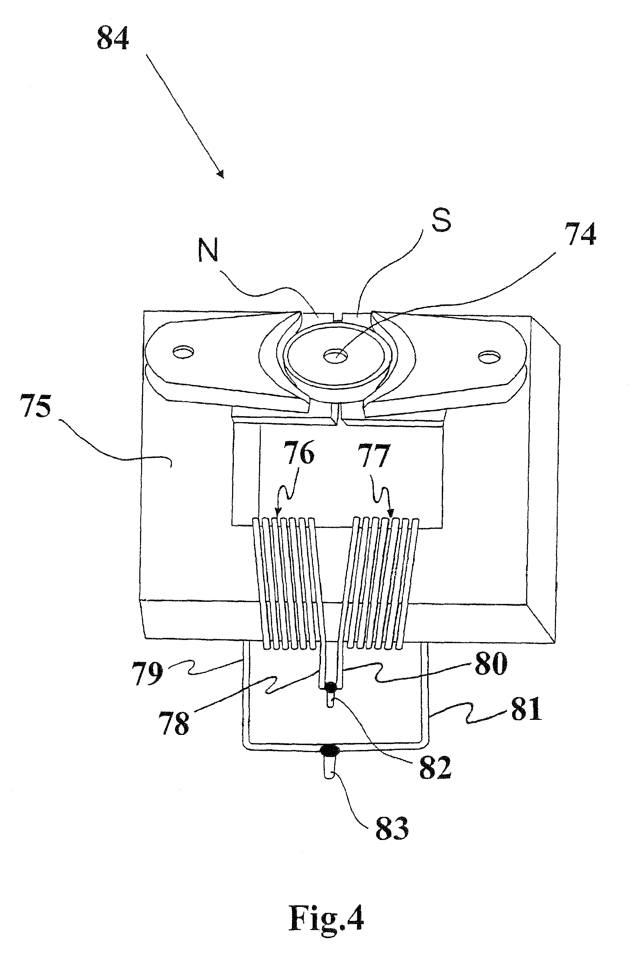

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.
A. Description of making SIP Induction Coils
   A SIP Induction Coil includes a magnetic core and two conductive wires wound around the core (equal turns) symmetrically and connected in parallel. Coil 6 and coil 7 are wound symmetrically and connected in parallel (wire ends 8 & 10 and wire ends 9 & 11) to form a SIP Induction Coil or a SIP Inductor as shown in Figure 1.
B. Theoretical Principle:
   Since a SIP Induction Coil is made of two coils wound symmetrically (1/2 turns per coil) and connected in parallel, the resistance of each coil (1/2 length of wound wire in a prior-art induction coil) is ½ resistance of the prior-art induction coil (single wire induction coil); therefore, the SIP Induction Coil in this case would show only ¼ resistance of the correspondent prior-art induction coil (single wire induction coil of an equal wire length). This unique feature can provide designers more design freedom such as selecting thinner wires with more turns in each coil for better performance and efficiency with many great benefits of less cupper loss, reduced temperature-rise (energy saving) and reduced size (volume) of the induction coils. The SIP Induction Coils can be applied to designing SIP Electromagnetic Devices (inductors, transformers, motors and generators). The unique features of the invention are reduced magnetization current, less cupper loss, less temperature-rise, better performance and efficiency with many benefits of energy savings, reduced size (volume) of electromagnetic devices and reduced cooling system if needed.
C. SIP Electromagnetic Devices Description:
   (1) SIP Inductors
      Refer to Figure 1, a SIP Inductor is made of two conductive wires wound symmetrically and connected in parallel. Resistance of the SIP Inductor 14 is only ¼ resistance of a correspondent prior-art inductor (equal wire size and length). For a specific inductance, a SIP Inductor can be designed by using thinner wire so that the SIP Inductor can have many benefits of less cupper loss, less temperature-rise, better performance and efficiency, and reduced size (volume) of the inductor. Inductors are used in wave filter, stabilizer of fluorescent light and others. SIP Inductors may contribute greatly to miniaturization of electromagnetic devices.
   (2) SIP Transformers
      Refer to Figure 2, a prior-art transformer 45 consists of a primary coil 26 wound on the core 25 and secondary coil 46 wound above the primary coil 26. Primary coil 26 and secondary coil 46 have several layers of turns respectively; the turns ratio of the primary coil and secondary coil determines the ratio of input voltage and output voltage. Refer to Figure 3, a SIP Transformer 65 consists of a SIP Primary Coil 44 (coils 36 and 37) and a SIP Secondary Coil 64 (coils 56 and 57). There is an insulation between the SIP Primary Coil 44 and the SIP Secondary Coil 64 (the insulation not shown in Figures 2 and 3). Input power enters SIP Primary Coil 44 and output power is from the SIP Secondary Coil 64.
   (3) SIP Induction Motors
      Refer to Figure 4, a SIP Induction Motor 84 includes a shaft 74 and a magnetic core 75 on which coil 76 and coil 77 are wound symmetrically and connected in parallel. A SIP Induction Motor has less cupper loss, lower temperature-rise, faster acceleration, reduced noise, better performance and higher efficiency than those of a correspondent traditional induction motor (prior art).
   (4) SIP Generators
      Refer to Figure 4, a SIP Generator 84 includes a shaft 74 and a magnetic core 75 on which coils 76 and coil 77 are wound symmetrically and connected in parallel. When shaft 74 starts revolving, it would generate electricity. A SIP Generator has lower temperature-rise, better performance and higher efficiency in generating electricity than a correspondent traditional generator (prior art).
D. Some Test Data of a SIP Transformer and two traditional transformers (prior art)
   (1) A 3-volt SIP Transformer and a traditional 3-volt transformer (prior art)
      A 3-volt traditional transformer includes a primary coil (125 Ohms) and a secondary coil (0.2 Ohm). Based on these specific resistances, a SIP Transformer can be designed as follows :
      The SIP Primary Coil is made of two thinner conductive wire (1/2 wire size) whose unit resistance is 4 times unit resistance of the primary coil in the traditional transformer; the wire length of each coil in the SIP Primary Coil is 1/2 wire length of the primary coil in the traditional transformer so that each coil of the SIP Primary Coil has a 250-Ohm resistance. The SIP Primary Coil which is consist of two symmetrical coils connected in parallel has a 125-Ohm resistance same as that of the primary coil in the traditional transformer. The SIP Secondary Coil is similarly made of two thinner wire (1/2 wire size of the secondary coil in the traditional transformer) and each of the two coils has ½ wire length of the secondary coil in the traditional transformer. The SIP Secondary Coil has 0.2-Ohm resistance same as that of the secondary coil in the traditional transformer. Such a SIP Transformer has the benefits of reduced cupper loss, better performance, higher efficiency, lower temperature-rise and reduced volume.
   (2) Performance of a SIP Transformer and two traditional transformers
      Refer to Tables 1a & 1b, under an 8-Ohm load and similar voltage ratio (120V/3.57V, 120V/3.88V), a traditional transformer has an input current 0.182A and output current 0.360A while the SIP Transformer has a 0.069A input current and an output current of 0.392A.
      Refer to Table 1c (temperature measurements), the traditional transformer shows a range of 140-145.8 F during 30-120 minutes while the SIP Transformer shows a range of 104.5-108.7 F during 30-120 minutes. The SIP transformer shows a significantly lower temperatures during 30-120 minutes than those of the correspondent traditional standard transformer (prior art).
      Refer to Table 2a, for the specific voltage ratio (120V/3V), a SIP Transformer has shown significantly lower input current and input power, and significantly higher efficiency than those of a traditional standard transformer (prior art). Refer to Table 2b (inductance measurements), The SIP Transformer shows higher inductances (2.17 H & 0.00279 H) across the SIP Primary Coil and across the SIP Secondary Coil than those (1.50 H & 0.00180 H) of the traditional standard transformer (prior art). The SIP Transformer shows higher leakage inductance (0.0263 H & 0.0000304 H) across the SIP Primary Coil and the SIP Secondary Coil than those (0.0167H & 0.0000170H) of the traditional standard Transformer (prior art).
      Refer to Table 3a (No Load tests), the SIP Transformer shows significantly higher inductance (3.771 H & 0.03543 H) in the SIP Primary Coil and SIP Secondary Coil, significantly lower magnetization current (0.018795 A) and significantly lower input power (0.994 W) than those (0.681H & 0.003176H, 0.150148A, and 4.557 W) of the Square-D transformer (prior-art). Refer to Table 3b (Loaded tests), the SIP Transformer with Loads (10 & 4.7 Ohm) shows lower input current (0.11193 A & 0.21782 A), lower input power (13.298 W & 26.074 W) and higher efficiency (88.6% & 87.5%) than those (0.22050 A & 0.34856A, 20.473 W & 38.406 W and 77.5% & 84.9%) of the Square-D transformer (prior art).

From the above tests (Tables 1a - 3b) on the SIP Transformer and two traditional transformers (prior art), they clearly show that the SIP Transformer has better performance, higher efficiency and many great benefits of reduced magnetization current, lower input current, lower input power, lower temperature-rise, higher inductances and higher leakage inductances across the primary coil and secondary coil than those of the traditional transformers (prior art). The invention of SIP Electromagnetic Devices can contribute greatly to the industries of electromagnetic devices in making electromagnetic devices with better performance & higher efficiency and many great benefits of more energy savings, reduced size (volume) of the electromagnetic devices and reduced cooling systems if needed.

**Table 1a: Power Tests of a Standard Transformer (Prior Art) and a SIP Transformer**

| Type of Transformer | Load (Ohm) | Voltage In (V) | Current In (A) | Voltage Out (V) | Current Out (A) |
|---|---|---|---|---|---|
| Standard Transformer | 8.0 | 60.0 | 0.018 | 1.80 | 0.185 |
| SIP Transformer | 8.0 | 60.0 | 0.012 | 1.93 | 0.196 |
| Standard Transformer | 8.0 | 120.0 | 0.182 | 3.57 | 0.360 |
| SIP Transformer | 8.0 | 120.0 | 0.069 | 3.88 | 0.392 |
| Standard Transformer | 4.0 | 120.0 | 0.1765 | 3.50 | 0.865 |
| SIP Transformer | 4.0 | 120.0 | 0.0710 | 3.75 | 0.925 |
| Standard Transformer | 1.5 | 120.0 | 0.1630 | 3.30 | 1.968 |
| SIP Transformer | 1.5 | 120.0 | 0.0905 | 3.44 | 2.050 |

**Table 1b: Resistance Measurements of a Standard Transformer (Prior Art) and a SIP Transformer**

| Type of Transformer | Primary Coil Resistance (Ohm) | Secondary Coil Resistance(Ohm) |
|---|---|---|
| Standard Transformer | 129.0 | 0.2 |
| SIP Trnsformer | 127.6 | 0.3 |

Table 1c: Temperature Measurements of a Standard Transformer (Prior Art) and a SIP Transformer

With 120 Vac into a Light Bulb (3-6 Vac)

| Type of Transformer | Time (minutes) | Temperature (F) |
|---|---|---|
| Standard Transformer | 30 | 140.0 |
| SIP Transformer | 30 | 104.5 |
| Standard Transformer | 60 | 144.0 |
| SIP Transformer | 60 | 107.7 |
| Standard Transformer | 120 | 144.8 |
| SIP Transformer | 120 | 108.7 |

**Table 2a: Power Measurements of a Standard Transformer (Prior Art) and a SIP Transformer**

| Type of Transformer | Into Load (Ohm) | Voltage In (Vac) | Current In (A) | Power In (W) | Power Factor | Voltage Out (Vac) | Current Out (A) | Output Power (W) | Efficiency % |
|---|---|---|---|---|---|---|---|---|---|
| Standard Transforms | Light Bulb (3-6 Vac) | 120.5 | 0.1884 | 6.39 | 0.2815 | 3.60 | 0.113 | 0.4070 | 6.37 |
| SIP Transforms | Light Bulb (3-6 Vac) | 120.2 | 0.0689 | 1.63 | 0.1968 | 3.93 | 0.119 | 0.4677 | 28.69 |
| Standard Transformer | 8 | 120.4 | 0.1769 | 7.19 | 0.3376 | 3.47 | 0.443 | 1.5370 | 21.38 |
| SIP Transformer | 8 | 120.4 | 0.0685 | 2.98 | 0.3612 | 3.77 | 0.471 | 1.7757 | 59.59 |
| Standard Transformer | 4 | 120.3 | 0.16840 | 8.12 | 0.4008 | 3.30 | 0.85 | 2.8050 | 34.54 |
| SIP Transformer | 4 | 120.7 | 0.07137 | 4.78 | 0.5549 | 3.58 | 0.93 | 3.3294 | 69.65 |
| Standard Transformer | 1.5 | 120.4 | 0.1552 | 10.55 | 0.5646 | 2.94 | 1.884 | 5.5390 | 52.50 |
| SIP Transformer | 1.5 | 120.3 | 0.0885 | 8.90 | 0.8360 | 3.09 | 1.994 | 6.1615 | 69.23 |
| Standard Transformer | No Load | 129.5 | 0.1860 | 5.70 | | | | | |
| SIP Transformer | No Load | 119.6 | 0.0686 | 1.13 | | | | | |

**Table 2b: Inductance Measurements of a Standard Transformer (Prior Art) and a SIP Transformer**

| Type of Transformer | Inductance (H) Across Primary | Inductance (H) Across Secondary |
|---|---|---|
| Standard Transformer | 1.50 | 0.00180 |
| SIP Transformer | 2.17 | 0.00279 |
| Type of Transformer | Leakage Inductance (H) Across Primary | Leakage Inductance (H) Across Secondary |
| Standard Transformer | 0.0167 | 0.0000170 |
| SIP Transformer | 0.0263 | 0.0000304 |

**Table 3a: No Load Tests of a Square D Transformer (Prior Art) and a SIP Transformer**

| Parameters | Square D Transformer (Prior Art) | SIP Transformer |
|---|---|---|
| DC Primary Resistance (Ohm) | 5.961 | 16.585 |
| DC Secondary Resistance(Ohm) | 0.1545 | 0.3223 |
| Primary Inductance (H) | 0.681 | 3.771 |
| Secondary Inductance (H) | 0.003176 | 0.03543 |
| Turns Ratio | 9.44 | 10.587 |
| Leakage Inductance (H) | 0.016965 | 0.022263 |
| Magnetization Currant (A) | 0.150148 | 0.018795 |
| Primary Input Power (W) | 4.557 | 0.994 |

**Table 3b: Loaded Tests of a Square D Transformer (Prior Art) and a SIP Transformer**

| Type of Transformer | Load (Ohm) | Primary Voltage (V) | Primary Current (A) | Input Power (W) | Secondary Voltage (V) | Secondary Current (A) | Output Power (W) | Efficiency (%) |
|---|---|---|---|---|---|---|---|---|
| Square D Transformer | 10 | 120 | 0.220497 | 20.473 | 12.602 | 1.259 | 15.870 | 77.5 |
| SIP Transformer | 10 | 120 | 0.111930 | 13.298 | 10.860 | 1.085 | 11.786 | 88.6 |
| Square D Transformer | 4.7 | 120 | 0.348562 | 38.406 | 12.340 | 2.642 | 32.610 | 84.9 |
| SIP Transformer | 4.7 | 120 | 0.217820 | 26.074 | 10.324 | 2.211 | 22.823 | 87.5 |
| Square D Transformer | 3.3 | 120 | --- | --- | --- | --- | --- | --- |
| SIP Transformer | 3.3 | 120 | 0.293510 | 35.170 | 9.956 | 3.011 | 29.973 | 85.2 |
| Square D Transformer | No Load | 120 | 0.150148 | 4.557 | | | | |
| SIP Transformer | No Load | 120 | 0.020140 | 0.994 | | | | |

With the 3.3 Ohm load on the Square D Transformer, the power required exceeded the power supply of the AT3600 used (50W).

### Marked Numbers Description:

5: A magnetic core in Fig. 1 (a SIP Induction Coil or a SIP Inductor)
6: A coil wound around the core from the center toward one end and back to the center and repeating
   winding cycles until the required number of turns are completed as shown in Fig. 1
7: A second coil wound around the core from the center toward the other end and back to the center
   and repeating winding cycles until the required number of turns are completed as shown in Fig. 1
8: One end of coil 6 shown in Fig. 1
9: The other end of coil 6 shown in Fig. 1
10: One end of coil 7 in Fig. 1
11: The other end of coil 7 in Fig. 1
12: A lead of two symmetrically wound wire ends 8 & 10 connected in parallel in Fig. 1
13: The other lead of two symmetrically wound wire ends 9 & 11 connected in parallel in Fig. 1
14: A SIP Induction Coil or a SIP Inductor in Fig. 1
25: The magnetic core of Fig. 2 (a prior-art transformer)
26: A primary coil in Fig. 2
28: One end of the primary coil in Fig. 2.
29: The other end of the primary coil in Fig. 2
35: The magnetic core in Fig. 3 (a SIP Transformer)
36: One primary coil in Fig. 3
37: The other primary coil in Fig. 3
38: One end of the primary coil 36 in Fig. 3
39: The other end of the primary coil 36 in Fig. 3
40: One end of the primary coil 37 in Fig. 3
41: The other end of the primary coil 37 in Fig. 3
42: One lead of two symmetrical primary coils 36 & 37 connected in parallel
43: The other lead of two symmetrical primary coils 36 & 37 connected in parallel in Fig. 3
44: A SIP Primary Coil of two symmetrical primary coils 36 & 37 connected in parallel in Fig. 3
45: A traditional transformer (prior art) in Fig. 2
46: The secondary coil in Fig. 2
48: One end of the secondary coil in Fig. 2
49: The other end of the secondary coil in Fig. 2
56: One secondary coil in Fig. 3
57: The other secondary coil in Fig. 3
58: One end of the secondary coil 56 in Fig. 3
59: The other end of the secondary coil 56 in Fig. 3
60: One end of the secondary coil 57 in Fig. 3
61: The other end of the secondary coil 57 in Fig. 3
62: One lead of the secondary coil 64 (two symmetrical wires 58 & 60 connected in parallel) in Fig. 3
63: The other lead of the secondary coil 64 (two symmetrical wires 59 & 61 connected in parallel) in Fig. 3
64: A SIP Secondary Coil of two symmetrical secondary coils 56 & 57 connected in parallel in Fig. 3
65: A SIP Transformer in Fig. 3
74: A shaft in a SIP Motor or a SIP Generator in Fig. 4
75: A magnetic core in a SIP Motor or a SIP Generator in Fig. 4
76: One coil is made of winding a conductive wire around the core in Fig. 4
77: The other coil wound around the core symmetrically to coil 76 in Fig. 4
78: One end of coil 76 in Fig. 4
79: The other end of coil 76 in Fig. 4
80: One end of coil 77 in Fig. 4
81: The other end of coil 77 in Fig. 4
82: A lead of two symmetrically wound coils 76 & 77 connected in parallel in Fig. 4
83: The other lead of two symmetrically wound coils 76 & 77 connected in parallel in Fig. 4
84: A SIP Motor or a SIP Generator in Fig. 4

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. A SIP induction coil consists of winding two conductive wires symmetrically around a magnetic core from the center toward two ends and winding back to the center and repeating winding cycles until the required number of turns are completed and the two symmetrical coils are connected in parallel.

2. A magnetic core for making a SIP induction coil in Claim 1, includes all kinds of magnetic materials and all shapes of the magnetic cores used in making all kinds of the traditional induction coils used in the traditional electromagnetic devices.

3. A SIP induction coil comprises one pair or more pairs of SIP induction coils in Claim 1.

4. A SIP electromagnetic device which contains one or more SIP Induction Coils in claim 1, containing the procedures of winding conductive wires Symmetrically and being connected In Parallel (SIP) includes SIP Inductors, SIP Transformers, SIP Motors and SIP Generators which correspond to all kinds of traditional inductors, traditional transformers, traditional motors and traditional generators.

5. A SIP electromagnetic device which contains one or more SIP Induction Coils in claim 2, containing the procedures of winding conductive wires Symmetrically and being connected In Parallel (SIP) includes SIP Inductors, SIP Transformers, SIP Motors and SIP Generators which correspond to all kinds of traditional inductors, traditional transformers, traditional motors and traditional generators.

6. A SIP electromagnetic device which contains one or more SIP induction coils in claim 3, containing the procedures of winding conductive wires symmetrically and being connected in parallel (SIP) includes SIP inductors, SIP transformers, SIP motors and SIP generators which correspond to all kinds of traditional inductors, traditional transformers, traditional motors and traditional generators.
